# FASCICULE DE BREVET EUROPEEN

(11) **EP 2 707 122 B1**
(45) Date de publication et mention de la délivrance du brevet: **05.06.2019**
(21) Numéro de dépôt: 12716493.7
(22) Date de dépôt: 28.03.2012
(51) Int. Cl.: B01D 53/32, B01D 53/86, B01J 19/08

(54) **DISPOSITIF POUR LE TRAITEMENT DES GAZ PAR PLASMA DE SURFACE**
VORRICHTUNG ZUR BEHANDLUNG VON GASEN MITTELS OBERFLÄCHENPLASMA
DEVICE FOR TREATING GASES USING SURFACE PLASMA

(30) Priorité: 10.05.2011 FR 1153982
(43) Date de publication de la demande: 19.03.2014
(73) Titulaire: Commissariat à l'Énergie Atomique et aux Énergies Alternatives, 75015 Paris (FR)
(72) Inventeur: BEDEL, Laurent, F-38950 Quaix En Chartreuse (FR); JOUVE, Michel, F-38470 VINAY (FR)
(74) Mandataire: Cabinet Laurent & Charras
(86) Numéro de dépôt international: PCT/FR2012/050644
(87) Numéro de publication internationale: WO 2012/153024

(56) Documents cités:
- EP-A1- 2 133 525
- JP-A- 11 347 342
- JP-A- 2000 140 562
- JP-A- 2006 198 029
- JP-A- 2008 049 280
- US-A- 5 746 984
- US-A1- 2004 000 475
- US-A1- 2005 118 079

## Description

### DOMAINE DE L'INVENTION

L'invention concerne un dispositif pour le traitement de gaz par plasma de surface, en présence d'un catalyseur.

Les domaines d'utilisation de la présente invention comprennent notamment la dégradation des polluants pouvant être contenus dans les gaz, le reformage, et la valorisation des gaz.

### ETAT ANTERIEUR DE LA TECHNIQUE

Dans le domaine du traitement des gaz, les procédés mettant en oeuvre un plasma peuvent s'avérer particulièrement avantageux dans la mesure où ils permettent d'éliminer les polluants à température ambiante pour un faible coût énergétique lorsque ceux-ci sont présents dans lesdits gaz en quantités minimes. Ils peuvent aussi abaisser la température de réaction entre deux composés gazeux et/ou abaisser l'énergie nécessaire pour réaliser une réaction entre deux composés. Il peut s'agir de plasmas volumiques ou surfaciques à pression atmosphérique.

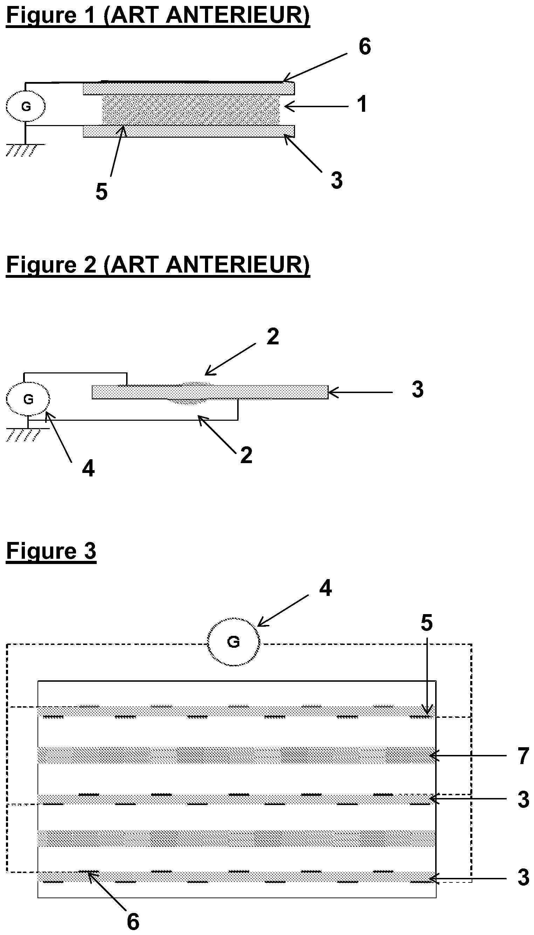

Dans le cas des plasmas atmosphériques, la technologie de décharge à barrière diélectrique, mieux connue sous l'acronyme anglo-saxon DBD (pour « *Discharge Barrier Dielectric* ») est généralement mise en oeuvre. Cette technologie consiste à appliquer un signal alternatif entre deux électrodes, un substrat diélectrique étant intercalé entre les deux électrodes afin d'éviter la formation d'un arc électrique (figure 1).

Dans le cas des plasmas DBD volumiques, l'espace entre les électrodes est limité à quelques millimètres eu égard au fait que la tension nécessaire pour générer le plasma augmente avec l'espace inter-électrodes (figure 1) et que l'épaisseur du substrat diélectrique est liée à sa rigidité diélectrique. L'espacement inter-électrodes dépend notamment de la nature du substrat diélectrique et de la tension appliquée. L'épaisseur du diélectrique est classiquement de 3 à 5 mm et l'espace libre pour le passage des gaz est du même ordre de grandeur ce qui engendre une perte de charge importante. Dans cette configuration, et comme décrit dans le document US 2002/0070127, un catalyseur peut être introduit dans la zone plasma par dépôt sur la face opposée à l'électrode. L'électrode elle-même peut également faire office de catalyseur dans le cas où elle est en matériau conducteur électrique.

La technologie DBD peut également être mise en oeuvre afin de générer un plasma de surface. Le plasma est alors créé au voisinage de la surface d'un substrat diélectrique. Les deux électrodes sont disposées sur ce substrat diélectrique, de part et d'autre des faces principales dudit substrat diélectrique (figure 2).

L'aire du plasma peut alors être ajustée en fonction de l'espace inter-électrodes. Dans cette configuration la distance entre chaque substrat diélectrique est indépendante des paramètres de la décharge. Ces plasmas de surface créent une accélération de la vitesse des gaz au voisinage des électrodes comme décrit dans le document US 7,380,756. La multiplication des électrodes sur la surface permet de créer des effets de jets perpendiculaires à la surface tel que décrit par Bénard et al. (« Thin Solid Films », Vol. 516, pp. 6660-6667 (2008).

Le document FR 2 918 293 propose d'utiliser ces plasmas de surface pour la dégradation de polluants en atmosphère gazeuse. Il décrit la mise en oeuvre d'un photocatalyseur (TiO₂) positionné sous forme d'une couche mince au contact du substrat diélectrique dans l'espacement inter-électrodes, ce catalyseur étant destiné à sélectionner les produits de décomposition. Dans ce cas, le catalyseur ne peut donc pas être un conducteur électrique tel qu'un métal afin d'éviter une forte réduction de la zone plasma.

La présente invention concerne notamment un dispositif permettant d'associer la genèse d'un plasma de surface à une large gamme de catalyseurs, pour le traitement des gaz, en particulier la dégradation des polluants, le reformage et la valorisation des gaz.

La présente invention permet d'améliorer la conversion des gaz, mais aussi de réduire les pertes de charge, tout en assurant une consommation d'énergie la plus faible possible et une température la plus basse.

D'ultérieurs dispositif de l'art antérieur sont divulgués dans US 2005/0118079, JP 2008 049280, US 2004/000475 et JP 2006 198029.

### EXPOSE DE L'INVENTION

Le Demandeur a mis au point un dispositif de traitement des gaz dans lequel un plasma permet de générer, à partir des gaz présents, des radicaux, des ions, des espèces actives dès la température ambiante. Ce dispositif permet de limiter les pertes de charge et de favoriser l'interaction avec des espèces activées par le plasma de surface et un système catalytique.

Le système catalytique interagit avec les espèces, notamment les polluants, pour augmenter l'efficacité du plasma, et agit également sur la sélectivité des réactions.

Plus précisément, la présente invention concerne un dispositif de traitement de gaz par plasma de surface selon la revendication 1, comprenant entre autres :
- au moins un substrat diélectrique présentant deux faces principales opposées, au moins une première électrode et au moins une deuxième électrode étant respectivement déposées sur les deux faces principales opposées dudit substrat, lesdites première et deuxième électrodes étant reliées aux deux bornes d'une source d'alimentation électrique ;
- au moins un support catalytique indépendant du substrat diélectrique et desdites électrodes, et intégrant un catalyseur.

Par électrode, on entend une électrode ou une multitude d'électrodes reliées à la même source et présentant donc le même potentiel. La source d'alimentation électrique présente avantageusement un signal alternatif ou impulsionnel.

Par multitude d'électrodes, on entend avantageusement des électrodes placées de façon parallèles les unes par rapport aux autres.

Par indépendant, on entend une indépendance physique du support catalytique par rapport au substrat ; en d'autres termes, ledit support catalytique n'est pas au contact dudit substrat, et ce faisant, n'est pas davantage au contact des électrodes. Plus particulièrement le plasma de surface formé ne vient pas au contact du support catalytique, ainsi le plasma ne risque pas de détériorer le support catalytique. Le plasma de surface permet de favoriser le renvoi accéléré, et ce de façon sensiblement perpendiculaire à la surface du substrat, des espèces contenus dans le flux gazeux à traiter.

De manière générale, les gaz traités au moyen du dispositif selon la présente invention comprennent des COVs (Composés Organiques Volatils), des NOₓ (oxydes d'azote)... Les quantités de polluants peuvent varier de moins de 1 ppm à plusieurs milliers de ppm selon l'application et la nature des gaz traités.

Comme déjà indiqué, la configuration du dispositif selon la présente invention permet de limiter les pertes de charge et de renforcer le contact entre les espèces actives créées par un plasma de surface et le support catalytique ou catalyseur. En effet, la présence d'un catalyseur entre deux substrats diélectriques permet de réduire la consommation d'énergie nécessaire pour traiter le gaz. Les espèces créées par le plasma de surface sont dirigées vers le support catalytique étant donné que ces plasmas créent une accélération de la vitesse des gaz au voisinage des électrodes et des effets de jets perpendiculaires à la surface des substrats diélectriques (Cf. Bénard et al.)

Il est à noter que le plasma de surface est formé au voisinage de chacune des deux faces principales du substrat diélectrique entre la première électrode et la deuxième électrode.

En outre, le dispositif selon l'invention offre une plus grande versatilité par rapport aux dispositifs de l'art antérieur, le support catalytique étant indépendant du substrat diélectrique comprenant les électrodes. Il entraine une synergie entre le catalyseur qui est positionné entre deux substrats diélectriques et généralement dans des corps poreux (mousse ou nids d'abeille). L'invention présente donc l'avantage de pouvoir associer au plasma une large gamme de catalyseurs (métal, oxyde ou mélange) compris dans un support catalytique conducteur ou isolant électrique (mousse, nid d'abeille...). D'autre part, dans ce dispositif, l'épaisseur du support catalytique n'est pas limitée, elle doit simplement être inférieure à l'espacement entre deux substrats diélectriques le cas échéant.

De manière avantageuse, les électrodes, première ou deuxième électrodes, du dispositif selon la présente invention peuvent présenter une largeur avantageusement comprise entre 1 mm et 10 cm, et plus avantageusement encore entre 3 et 5 mm.

Dans un mode de réalisation particulier, chaque électrode peut être constituée d'une pluralité de bandes parallèles entre elles, reliées au même potentiel, disposées sur le substrat diélectrique, et dont la projection de chacune des électrodes sur un plan parallèle au plan principal du substrat forme une interdigitation. Ainsi la surface du substrat diélectrique est avantageusement optimisée et une multitude de plasmas de surface peut être générée.

De manière avantageuse, la surface des électrodes déposées sur le substrat diélectrique représente entre 10 et 90 % du total de la surface de la face principale dudit substrat diélectrique comprenant lesdites électrodes, plus avantageusement entre 30 et 50 %.

Les électrodes déposées sur une face principale du substrat diélectrique peuvent être positionnées de façon sensiblement orthogonale ou sensiblement parallèle à la direction générale du flux du gaz à traiter. De préférence, elles sont orthogonales.

L'espacement inter-électrodes, défini par la distance séparant la projection desdites électrodes sur un plan parallèle au plan principal du substrat est compris entre 2 mm et 15 mm, avantageusement entre 4 et 8 mm.

Par ailleurs, le ratio entre l'espacement inter-électrodes tel que défini ci-dessus et la largeur des électrodes est typiquement compris entre zéro et 2.

Préférentiellement, l'épaisseur de chacune des électrodes est comprise entre 1µm et 2 mm.

De manière avantageuse, le support catalytique peut se présenter sous forme de plaque de matériau dense ; de mousse métallique ou céramique ; ou de nid d'abeille métallique ou céramique. Il est avantageusement réalisé en :
- céramique : zircone, zircone yttriée, oxyde de magnésium, cérine, oxyde de vanadium, cordiérite, WO₃, TiO₂, ZnO, et leurs mélanges ; ou en
- métal : Al, Cu, Ni, Zn, acier inoxydable, Ti, FeCrAl, et leurs mélanges.

Par ailleurs, le support catalytique présente généralement une épaisseur avantageusement comprise entre 1 mm et 10 cm, et plus avantageusement encore entre 5mm et 5 cm.

Le support catalytique comprend un catalyseur pouvant avantageusement être choisi dans le groupe comprenant les oxydes métalliques, les nitrures, les métaux, et leurs mélanges, plus avantageusement encore des métaux suivants : Pt, Ag, Ru, Rh, Cu, Fe, Cr, Pd, Zn, Mn, Co, Ni, V, Mo, Au, Ir, Ce.

Afin de limiter les pertes de charge, le substrat diélectrique et le support catalytique sont avantageusement espacés de 5 mm à 10 cm, et plus avantageusement de 5 mm à 5 cm.

Le substrat diélectrique est avantageusement réalisé en un matériau choisi dans le groupe comprenant la silice, le verre et l'alumine.

Le dispositif selon la présente invention peut comprendre au moins deux substrats diélectriques espacés l'un de l'autre, leur espacement étant compris entre 10 mm à 15 cm, et plus avantageusement entre 1 et 5 cm. Ce dispositif comprend au moins un support catalytique positionné entre deux faces principales comprenant les premières électrodes, ou entre deux faces principales comprenant les deuxièmes électrodes.

Dans cette configuration, les supports catalytiques sont disposés entre les diélectriques de manière à ce qu'ils recouvrent par projection au moins partiellement la zone des électrodes et du plasma.

Le support catalytique est disposé en regard de la face du substrat diélectrique sur laquelle le plasma est généré.

Dans un mode de réalisation particulier, le dispositif de traitement de gaz par plasma de surface selon la présente invention présente une forme cylindrique. Le substrat diélectrique et le support catalytique présentent donc des formes cylindriques et sont coaxiaux. Le substrat diélectrique peut donc être disposé à l'intérieur d'un support catalytique de forme cylindrique. Il en va de même s'agissant du support catalytique, ce dernier pouvant être disposé à l'intérieur d'un substrat diélectrique de forme cylindrique.

De manière générale, le plasma de surface peut être préférentiellement généré entre 900 mbar et 20 bar, plus préférentiellement entre 900 mbar et 2 bar, et encore plus préférentiellement à pression atmosphérique.

La présente invention concerne également l'utilisation du dispositif de traitement de gaz par plasma de surface tel que décrit ci-avant pour la dégradation des polluants (VOC, NOₓ,...) pouvant être contenus dans les gaz mais aussi pour le reformage d'hydrocarbures, d'alcool ou la valorisation du CO₂.

La présente invention présente notamment les avantages suivants :
- la distance entre les substrats diélectriques peut être ajustée selon l'application envisagée ;
- la structure du support catalytique peut être modifiée selon l'application envisagée ;
- la nature du catalyseur peut être choisie selon l'application envisagée ;
- la distance entre le substrat diélectrique et le support catalytique peut être ajustée selon l'application envisagée, afin de limiter les pertes de charge.

L'invention et les avantages qui en découlent ressortiront mieux des figures et exemples suivants, donnés afin d'illustrer l'invention et de manière non limitative.

### DESCRIPTION DES FIGURES

La figure 1 illustre la formation d'un plasma atmosphérique selon l'art antérieur entre deux électrodes déposées sur deux substrats diélectriques distincts, l'un des substrats diélectriques étant intercalé entre les deux électrodes.
La figure 2 illustre la formation d'un plasma de surface sur chaque face selon l'art antérieur entre deux électrodes déposées de part et d'autre d'un même substrat diélectrique.
La figure 3 illustre un dispositif de traitement de gaz par plasma de surface selon la présente invention, comprenant deux supports catalytiques et trois substrats diélectriques recouverts en partie d'électrodes.
La figure 4 illustre la projection des électrodes sur un même plan parallèle au plan principal du substrat.
La figure 5 illustre un dispositif de traitement de gaz par plasma de surface selon la présente invention de géométrie cylindrique, comprenant deux substrats diélectriques et deux supports catalytiques.
La figure 6 illustre la vue en coupe d'un dispositif de traitement de gaz par plasma de surface selon la présente invention montrant l'espacement inter-électrodes entre la première et la deuxième électrode déposées sur un substrat diélectrique.
La figure 7 représente le taux de conversion du toluène en fonction de l'énergie spécifique appliquée à un dispositif selon l'art antérieur (losanges) et à un dispositif selon la présente invention (carrés) dans le cadre du traitement de gaz.

### DESCRIPTION DETAILLEE DE L'INVENTION

Comme déjà dit, la figure 1 illustre la formation d'un plasma volumétrique à pression atmosphérique (1) entre deux électrodes (5, 6) reliées aux bornes d'une source d'alimentation électrique (4) selon l'art antérieur. Les deux électrodes sont déposées sur deux substrats diélectriques (3) espacés l'un de l'autre. Le plasma atmosphérique (1) est généré entre les deux électrodes (5, 6), séparées l'une de l'autre d'une part, par l'un des substrats diélectriques, et d'autre part, par l'espace séparant lesdits substrats.

La figure 2 illustre la formation d'un plasma de surface (2) sur chaque face entre deux électrodes (5, 6) reliées aux bornes d'une source d'alimentation électrique (4), selon une autre configuration de l'art antérieur. Les deux électrodes sont déposées sur deux faces opposées d'un même substrat diélectrique (3).

La figure 3 illustre la vue en coupe d'un dispositif de traitement de gaz par plasma de surface selon la présente invention. Ce dispositif comprend trois substrats diélectriques (3) en forme de plaques, chacune des plaques définissant deux faces principales opposées.

Les deux faces opposées de chacun de ces substrats reçoivent chacun une première électrode (5) et une deuxième électrode (6), lesdites électrodes étant chacune constituée d'une série de bandes parallèles entre elles, reliées au potentiel (4).

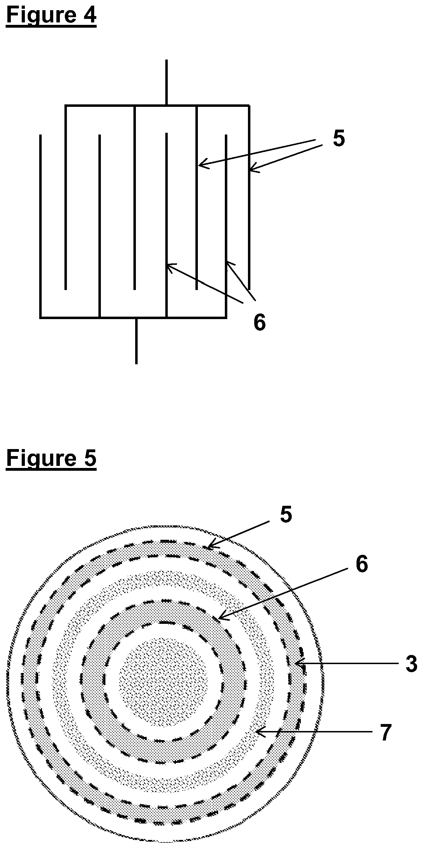

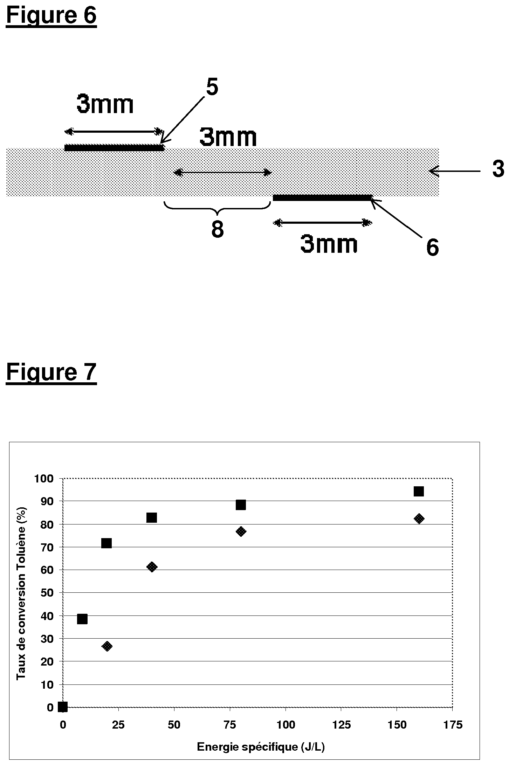

Sont interposés entre les substrats (3) des supports catalytiques (7) se présentant également sous la forme de plaques. Le support catalytique (7) est disposé en regard des faces des substrats diélectriques au voisinage desquelles les plasmas de surface sont générés
La figure 4 illustre la projection des électrodes (5) et (6) d'un même substrat de la figure 3 sur un plan parallèle audit substrat. Cette projection montre l'interdigitation desdites électrodes. On peut ainsi observer qu'il se définit un espacement inter-électrodes (8) (figure 6).

La figure 5 illustre un dispositif de traitement de gaz par plasma de surface selon la présente invention, présentant une forme cylindrique. On peut ainsi observer la mise en oeuvre de deux substrats diélectriques cylindriques coaxiaux, entre lesquels est interposé un support catalytique, cylindrique, et coaxial avec lesdits substrats. En outre, on a représenté un support catalytique central

La figure 6 représente une vue en coupe longitudinale d'un substrat diélectrique (3) comprenant une première électrode (5) et une deuxième électrode (6) intercalées de manière à former l'espacement inter-électrodes (8).

### EXEMPLES DE REALISATION DE L'INVENTION

Les exemples 1 et 2 concernent la décomposition du toluène dans de l'air sec comprenant 55 ppm de toluène.

### Exemple 1 (art antérieur) :

Le réacteur de forme rectangulaire mesure 4 cm de haut, 12 cm de large et 15 cm de long. A une extrémité se trouve l'entrée des gaz reliée à un dispositif d'injection de gaz, dans ce cas de l'air sec contenant 55 ppm de toluène (polluant que l'on souhaite éliminer), et à l'autre extrémité l'évacuation des gaz reliée à un appareil de chromatographie gazeuse pour déterminer le taux de conversion du toluène, c'est-à-dire son taux de dégradation.

Deux supports diélectriques mesurant 12 cm de large et 14 cm de long sont disposés dans le réacteur. Des cales de 2 cm de large en matériau diélectrique (quartz) sont disposées de part et d'autre le long du réacteur, afin d'assurer un espacement de 3 cm entre les deux substrats diélectriques. Des électrodes recouvrent le substrat diélectrique du réacteur sur toute sa largeur (hors cale) soit 8cm, leur longueur dans l'axe principal du réacteur étant est d'environ 7,5 cm.

Les électrodes sont en cuivre et présentent une largeur de 3 mm et une longueur de 7,5 cm.

La distance inter-électrodes (8) au sens de la figure 6 est de 3 mm. Chaque face des substrats diélectriques présente sept électrodes. Afin d'assurer la continuité électrique, les électrodes sont reliées entre elles par un circuit électrique en cuivre, dans la direction de la largeur du substrat diélectrique. Les premières électrodes (5) sont reliées à l'alimentation électrique du générateur, alors que les deuxièmes électrodes (6) sont reliées à la masse.

Le dispositif est balayé par de l'air contenant 55 ppm de toluène jusqu'à stabilisation de l'aire du pic correspondant au toluène et mesuré par chromatographie gazeuse afin d'obtenir un pic référence.

Une tension sinusoïdale de +/-15kV est ensuite appliquée sur les électrodes reliées au générateur pour une énergie spécifique consommée par le plasma de 320 J/L.

Le taux de conversion du toluène est déterminé après 30 minutes par mesure de l'aire du pic correspondant par chromatographie en phase gazeuse.

Puis, l'énergie spécifique du plasma est diminuée et au bout de 30 minutes le nouveau taux de conversion est déterminé. La même procédure est appliquée pour des énergies spécifiques plus faibles.

Les résultats obtenus sont répertoriés sur le graphe de la figure 7 (losanges) qui représente les taux de conversion du toluène en fonction de l'énergie spécifique consommée par le plasma. Le « taux de conversion » s'apparente au taux de dégradation ou de décomposition du toluène. Le toluène est très majoritairement converti en CO₂ et H₂O.

### Exemple 2 (invention)

Le dispositif est identique à celui de l'exemple 1 mais il comprend en outre un support catalytique sous forme de nid d'abeille réalisé en cordiérite de 5 mm d'épaisseur.

Le support catalytique est disposé entre les deux substrats diélectriques, à 12.5 mm de chacun des substrats diélectriques. Il comprend environ 500 ppm de platine et 500 ppm de palladium dans des canaux orientés perpendiculairement aux plaques de substrat diélectrique.

Le protocole expérimental est identique à celui de l'exemple 1.

Les résultats sont également reproduits sur le graphe de la figure 7 (carrés). Pour une énergie spécifique équivalente, le dispositif selon la présente invention (carrés) présente un taux de conversion plus élevé que celui de l'art antérieur (losanges). En conséquence, à taux de conversion de toluène identique, le dispositif selon la présente invention requiert moins d'énergie ou présente un taux de conversion supérieur pour une énergie spécifique identique.

## Revendications

1. Dispositif de traitement de gaz par plasma de surface, comprenant :
- au moins deux substrats diélectriques (3) chacun des substrats diélectriques (3) présentant :
- deux faces principales opposées, au moins une première électrode (5) et
- au moins une deuxième électrode (6) étant respectivement déposées sur lesdites faces principales opposées du substrat,
lesdites première et deuxième électrodes étant reliées aux deux bornes d'une source d'alimentation électrique (4),
lesdites première et deuxième électrodes étant agencées de manière à former un plasma de surface au voisinage de chacune des deux faces principales de chacun des substrats diélectriques (3), entre la première électrode (5) et la deuxième électrode (6) ;
- au moins un support catalytique (7) n'étant pas au contact des substrats diélectriques (3) et desdites électrodes (5,6), et intégrant un catalyseur ;
ledit support catalytique étant positionné entre deux faces principales comprenant les premières électrodes de deux substrats diélectriques (3), ou entre deux faces principales comprenant les deuxièmes électrodes de deux substrats diélectriques (3), ledit support catalytique étant en regard de la face de chaque substrat diélectrique sur laquelle le plasma est généré ;
chaque substrat diélectrique étant espacé du support catalytique de 5 mm à 10 cm.

2. Dispositif de traitement de gaz par plasma de surface selon la revendication 1, ***caractérisé* en ce que** la première et la deuxième électrodes sont disposées de manière à ce que la distance inter-électrodes (8) est comprise entre 2 et 15 mm, avantageusement comprise entre 4 et 8 mm.

3. Dispositif de traitement de gaz par plasma de surface selon l'une des revendications 1 ou 2, ***caractérisé* en ce que** les première et deuxième électrodes présentent chacune une largeur comprise entre 1 mm et 10 cm, avantageusement entre 3 et 5 mm.

4. Dispositif de traitement de gaz par plasma de surface selon l'une quelconque des revendications précédentes, ***caractérisé* en ce que** le support catalytique est choisi dans le groupe comprenant une plaque de matériau dense et une mousse métallique ou céramique.

5. Dispositif de traitement de gaz par plasma de surface selon l'une quelconque des revendications 1 à 3, ***caractérisé* en ce que** le support catalytique se présente sous la forme d'un nid d'abeille métallique ou céramique.

6. Dispositif de traitement de gaz par plasma de surface selon l'une quelconque des revendications précédentes, ***caractérisé* en ce que** le support catalytique présente une épaisseur comprise entre 1 mm et 10 cm.

7. Dispositif de traitement de gaz par plasma de surface selon l'une quelconque des revendications précédentes, ***caractérisé* en ce que** le support catalytique comprend un catalyseur choisi dans le groupe comprenant les oxydes métalliques, les nitrures, les métaux, et leurs mélanges.

8. Dispositif de traitement de gaz par plasma de surface selon la revendication 7, ***caractérisé* en ce que** le métal, l'oxyde métallique ou le nitrure sont à base d'un métal choisi dans le groupe comprenant Pt, Ag, Ru, Rh, Cu, Fe, Cr, Pd, Zn, Mn, Co, Ni, V, Mo, Au, Ir, Ce.

9. Dispositif de traitement de gaz par plasma de surface selon la revendication 1, ***caractérisé* en ce que** l'espacement entre les au moins deux substrats diélectriques est compris entre 10 mm et 15 cm, et avantageusement entre 1 et 5 cm.

10. Dispositif de traitement de gaz par plasma de surface selon l'une quelconque des revendications précédentes, ***caractérisé* en ce qu'**il présente une forme cylindrique, le substrat diélectrique et le support catalytique étant de forme cylindrique et coaxiaux.

11. Dispositif de traitement de gaz par plasma de surface selon l'une quelconque des revendications précédentes, ***caractérisé* en ce qu'**il comprend :
- au moins deux substrats diélectriques (3) présentant chacun deux faces principales opposées, au moins une première électrode (5) et au moins une deuxième électrode (6) étant respectivement déposées sur lesdites faces principales opposées de chacun des substrats, lesdites première et deuxième électrodes étant reliées aux deux bornes d'une source d'alimentation électrique (4) ;
- au moins un support catalytique (7), n'étant pas au contact des substrats diélectriques et desdites électrodes, et intégrant un catalyseur ;
ledit support catalytique étant positionné entre lesdits deux substrats diélectriques, entre deux faces principales comprenant les premières électrodes ou entre deux faces principales comprenant les deuxièmes électrodes.

12. Dispositif de traitement de gaz par plasma de surface selon la revendication 13, ***caractérisé* en ce que** l'espacement entre les au moins deux substrats est compris entre 10 mm et 15 cm.

13. Dispositif de traitement de gaz par plasma de surface selon la revendication 11 ou 12, ***caractérisé* en ce qu'**il présente une forme cylindrique, les substrats diélectriques et le support catalytique étant de forme cylindrique et coaxiaux.

## Patentansprüche

1. Vorrichtung zum Behandeln von Gasen unter Verwendung von Oberflächenplasma, umfassend:
- mindestens zwei dielektrische Substrate (3)
jedes dieser dielektrischen Substrate (3) weist dabei auf:
- je zwei gegenüberliegende Hauptoberflächen, mindestens eine erste Elektrode (5) und
- mindestens eine zweite Elektrode (6), die jeweils auf den zwei gegenüberliegenden Hauptoberflächen des Substrats abgeschieden sind ,
wobei diese erste und zweite Elektrode mit den beiden Klemmen einer Stromversorgungsquelle (4) verbunden sind;
wobei diese erste und zweite Elektrode so angeordnet sind, dass sie ein Oberflächenplasma in der Nachbarschaft jeder der beiden Hauptoberflächen jedes dielektrischen Substrats (3), zwischen der ersten (5) und der zweiten (6) Elektrode bilden;
- mindestens einen katalytischen Träger (7), der keinen Kontakt zu den dielektrischen Substraten (3) und zu diesen Elektroden (5, 6) hat und in den ein Katalysator integriert ist;
dieser katalytische Träger ist zwischen zwei Hauptoberflächen angeordnet, die die ersten Elektroden von zwei dielektrischen Substraten (3) umfassen, oder zwischen zwei Hauptoberflächen, die die zweiten Elektroden von zwei dielektrischen Substraten (3) umfassen,
dieser katalytische Träger befindet sich gegenüber der Seite jedes dielektrischen Substrats, auf der das Plasma erzeugt wird;
jedes dielektrische Substrat hat zum katalytischen Träger einen Abstand von 5 mm bis 10 cm.

2. Vorrichtung zum Behandeln von Gasen unter Verwendung von Oberflächenplasma nach Anspruch 1, ***dadurch gekennzeichnet, dass*** die erste und die zweite Elektrode so angeordnet sind, dass der Zwischenabstand (8) der Elektroden zwischen 2 und 15 mm liegt, noch besser zwischen 4 und 8 mm.

3. Vorrichtung zum Behandeln von Gasen unter Verwendung von Oberflächenplasma nach einem der Ansprüche 1 oder 2 ***dadurch gekennzeichnet, dass*** die erste und die zweite Elektrode jeweils eine Breite zwischen 1 mm und 10 cm haben, besser noch zwischen 3 und 5 mm.

4. Vorrichtung zum Behandeln von Gasen unter Verwendung von Oberflächenplasma nach irgendeinem der vorstehenden Ansprüche, ***dadurch gekennzeichnet, dass*** der katalytische Träger ausgewählt wird aus einer Gruppe mit einer Platte aus dichtem Material und einem Metall- oder Keramikschaum.

5. Vorrichtung zum Behandeln von Gasen unter Verwendung von Oberflächenplasma nach einem der Ansprüche 1 bis 3, ***dadurch gekennzeichnet, dass*** der katalytische Träger die Form einer Metall- oder Keramikwabe hat.

6. Vorrichtung zum Behandeln von Gasen unter Verwendung von Oberflächenplasma nach irgendeinem der vorstehenden Ansprüche, ***dadurch gekennzeichnet, dass*** der katalytische Träger eine Dicke zwischen 1 mm und 10 cm hat.

7. Vorrichtung zum Behandeln von Gasen unter Verwendung von Oberflächenplasma nach irgendeinem der vorstehenden Ansprüche, ***dadurch gekennzeichnet, dass*** der katalytische Träger einen Katalysator umfasst, der ausgewählt wird aus der Gruppe, zu der Metalloxide, Nitride, Metalle und ihre Mischungen gehören.

8. Vorrichtung zum Behandeln von Gasen unter Verwendung von Oberflächenplasma nach Anspruch 7, ***dadurch gekennzeichnet, dass*** das Metall, das Metalloxid oder das Nitrid als Basis ein Metall aus der Gruppe, bestehend aus Pt, Ag, Ru, Rh, Cu, Fe, Cr, Pd, Zn, Mn, Co, Ni, V, Mo, Au, Ir und Ce haben.

9. Vorrichtung zum Behandeln von Gasen unter Verwendung von Oberflächenplasma nach Anspruch 1, ***dadurch gekennzeichnet, dass*** der Abstand zwischen den mindestens zwei dielektrischen Substraten zwischen 10 mm und 15 cm liegt, möglichst zwischen 1 und 5 cm.

10. Vorrichtung zum Behandeln von Gasen unter Verwendung von Oberflächenplasma nach irgendeinem der vorstehenden Ansprüche, **dadurch gekennzeichnet, dass** sie eine zylindrische Form hat, da das dielektrische Substrat und der katalytische Träger eine zylindrische und koaxiale Form haben.

11. Vorrichtung zum Behandeln von Gasen unter Verwendung von Oberflächenplasma nach irgendeinem der vorstehenden Ansprüche, **dadurch gekennzeichnet, dass** sie umfasst:
- mindestens zwei dielektrische Substrate (3), von denen jedes je zwei gegenüberliegende Hauptoberflächen aufweist, mindestens eine erste Elektrode (5) und mindestens eine zweite Elektrode (6), die jeweils auf den zwei gegenüberliegenden Hauptoberflächen des Substrats abgeschieden sind, wobei die erste und die zweite Elektrode mit den beiden Klemmen einer Stromversorgungsquelle (4) verbunden sind;
- mindestens einen katalytischen Träger (7), der keinen Kontakt zu den dielektrischen Substraten und diesen Elektroden hat;
dieser katalytische Träger ist zwischen den genannten beiden dielektrischen Substraten angeordnet, zwischen zwei Hauptoberflächen die die ersten Elektroden umfassen, oder zwischen zwei Hauptoberflächen, die die zweiten Elektroden umfassen.

12. Vorrichtung zum Behandeln von Gasen unter Verwendung von Oberflächenplasma nach Anspruch 13, ***dadurch gekennzeichnet, dass*** der Abstand zwischen den mindestens zwei dielektrischen Substraten zwischen 10 mm und 15 cm liegt.

13. Vorrichtung zum Behandeln von Gasen unter Verwendung von Oberflächenplasma nach Anspruch 11 oder 12, ***dadurch gekennzeichnet, dass*** er eine zylindrische Form. hat, da die dielektrischen Substrate und der katalytische Träger eine zylindrische und koaxiale Form haben.

## Claims

1. A device for treating gases by means of a surface plasma, comprising:
- at least two dielectric substrate (3), each having
▪ two opposite main surfaces, at least one first electrode (5), and
▪ at least one second electrode (6) being respectively deposited on the two opposite main surfaces of said substrate,
said first and second electrodes being connected to the two terminals of an electric power supply source (4);
said first and second electrodes being arranged so that a surface plasma is formed around each of the two main surfaces of the dielectric substrates between the first electrode and the second electrode ;
- at least one catalytic support (7) independent from the dielectric substrates and from said electrodes (5, 6), and integrating a catalyst;
said catalytic support being positioned between two main surfaces comprising the first electrodes of the two dielectric substrates (3), or between two main surfaces comprising the second electrodes of the two dielectric substrates (3) ;
said catalytic support being in front of the surface of each dielectric support having the plasma generated thereon ;
each dielectric substrate being spaced apart from the catalytic support by from 5 mm to 10 cm.

2. The device for treating gases by means of a surface plasma of claim 1, ***characterized in that*** the first and the second electrodes are arranged so that the inter-electrode distance (8) is in the range between 2 and 15 mm, advantageously between 4 and 8 mm.

3. The device for treating gases by means of a surface plasma of any of claims 1 or 2, ***characterized in that*** the first and second electrodes each have a width in the range between 1 mm and 10 cm, advantageously between 3 and 5 mm.

4. The device for treating gases by means of a surface plasma of any of the foregoing claims, ***characterized in that*** the catalytic support is selected from the group comprising a wafer of dense material and a metal or ceramic foam.

5. The device for treating gases by means of a surface plasma of any of claims 1 to 3, ***characterized in that*** the catalytic support appears in the form of a metal or ceramic honeycomb.

6. The device for treating gases by means of a surface plasma of any of the foregoing claims, ***characterized in that*** the catalytic support has a thickness in the range between 1 mm and 10 cm.

7. The device for treating gases by means of a surface plasma of any of the foregoing claims, ***characterized in that*** the catalytic support comprises a catalyst selected from the group comprising metal oxides, nitrides, metals, and mixtures thereof.

8. The device for treating gases by means of a surface plasma of claim 7, ***characterized in that*** the metal, the metal oxide, or the nitride are based on a metal selected from the group comprising Pt, Ag, Ru, Rh, Cu, Fe, Cr, Pd, Zn, Mn, Co, Ni, V, Mo, Au, Ir, Ce.

9. The device for treating gases by means of a surface plasma of claim 1, ***characterized in that*** the spacing between the at last two dielectric substrates is in the range between 10 mm and 15 cm, and advantageously between 1 and 5 cm.

10. The device for treating gases by means of a surface plasma of any of the foregoing claims, ***characterized in that*** said devise has a cylindrical shape, the dielectric substrate and the catalytic support having a cylindrical shape and being coaxial.

11. The device for treating gases by means of a surface plasma of any of the foregoing claims, ***characterized in that*** it comprises :
▪ at least two dielectric substrate (3), each having two opposite main surfaces, at least one first electrode (5), and at least one second electrode (6), being respectively deposited on the said opposite main surfaces of each of the substrates, said first and second electrodes being connected to the two terminals of an electric power supply source (4);
▪ at least one catalytic support (7) independent from the dielectric substrates and from said electrodes (5, 6), and integrating a catalyst;
said catalytic support being positioned between the said substrates, between two main surfaces comprising the first electrodes or between two main surfaces comprising the second electrodes.

12. The device for treating gases by means of a surface plasma of claim 11, ***characterized in that*** the spacing between the at last two substrates is in the range between 10 mm and 15 cm.

13. The device for treating gases by means of a surface plasma of claim 11 or 12, ***characterized in that*** said devise has a cylindrical shape, the dielectric substrate and the catalytic support having a cylindrical shape and being coaxial.
